Europäisches Patentamt

European Patent Office

Office européen des brevets

(11) Publication number: **0 444 340 A1**

# EUROPEAN PATENT APPLICATION

(21) Application number: 90302276.2

(22) Date of filing: 02.03.90

(51) Int. Cl.5: **B32B 27/32**, B32B 27/36

(43) Date of publication of application:
04.09.91 Bulletin 91/36

(84) Designated Contracting States:
AT BE CH DE DK ES FR GB GR IT LI LU NL SE

(71) Applicant: **MOBIL OIL CORPORATION**
**150 East 42nd Street**
**New York New York 10017(US)**

(72) Inventor: **Mount, Eldridge Milford, III**
**88 Country Downs Circle**
**Fairport, New York 14450(US)**
Inventor: **Benedict, Alan James**
**25, South Street**
**Clifton Springs, New York 14432(US)**

(74) Representative: **Colmer, Stephen Gary et al**
**Patent Department c/o Mobil Services**
**Company Limited Mobil Court 3 Clements**
**Inn**
**London WC2A 2EB(GB)**

(54) Film having metallizable surface.

(57) An oriented, heat sealable polypropylene film is provided having a metallizable surface. The film includes a core layer derived from isotactic polypropylene containing an effective amount of adhesion promoting agent. A copolyester layer is bonded to the core layer, the adhesion promoting agent protecting against the delamination thereof. A heat sealable layer formed from an ethylene-propylene random copolymer is bonded to the opposite side of the core layer. The film is formed as a coextrudate and is biaxially oriented.

EP 0 444 340 A1

Xerox Copy Centre

## FILM HAVING METALLIZABLE SURFACE

This invention related to metallizable, oriented plastics films; more particularly, this invention relates to such films having improved lamination bond strengths and heat sealability; and to metal coated such films.

The bonding of metals such as aluminium, silver and chromium to plastic films has allowed such films to replace metal foils in many of their applications. The flexibility of the films necessitates the formation of a strong metal-plastic bond, and a number of approaches have been developed for providing such bonding.

This invention seeks to provide metallizable, oriented plastics films of good metal adhesion and metal uniformity which plastics films have good clarity, lamination bond strength, low water vapour and oxygen transmission; and are heat-sealable.

In accordance with a first aspect of this invention, there is provided a metallizable, oriented plastics film which comprises:

(i) a core layer comprising an isotactic polypropylene;

(ii) a coextruded copolyester layer bonded to one side of the core layer; and

(iii) a coextruded heat sealable layer bonded to the opposite side of the core layer.

This invention also provides a metal-coated, oriented plastics film which comprises a metallizable film as herein described having (iv) a metal coating upon the coextruded copolyester layer (ii). This invention also provides the use of a copolyester layer (ii) in bonding a metal coating (iv) to a polypropylene core layer (i).

A multi-layer metallizable, oriented plastics film is provided including a core layer (i) comprised polypropylene homopolymer of high stereoregularity. This isotactic polymer is well known to the packaging art, has a density from 0.90 to 0.91, a crystalline melting point from 160° to 165°C, and a melt index from 2.0 to 6, preferably from 3 to 4, grams/10 minutes. It is from 80 to 100%, isotactic, and preferably from 95 to 96% isotactic. An adhesion promoting agent is preferably contained within this layer. A suitable agent is an emulsifiable polyolefin wax which contains a small percentage of maleio acid which acts as a coupling agent to bond dissimilar materials together. Such a wax is available under the trade name EPOLENE E-43 from Eastman Chemical Products, Inc.

A metallizable surface is provided by a layer of polyester (ii). The adhesion promoting agent within the polypropylene homopolymer is required to tie the core layer with the copolyester layer as they are incompatible in their natural state and may delaminate.

Copolyesters are made from more than one dibasic acid and/or glycol. They are often used as extruded sheets for blister-packaging applications, and sometimes for bottles. An amorphous (noncrystalline) thermoplastic copolyester material such as ethylene-1, 4-cyclohexylene-dimethylene terephthalate has been found to have suitable properties for example: gloss, transparency, toughness) for the film disclosed herein. This material is commercially available under the trade name KODAR PETG COPOLYESTER 6763. The copolyester may be bonded to itself with a saran (PVDC) coating. Bond strengths approaching 100 grams per inch may be obtained.

A heat sealable layer of ethylene-polypropylene random copolymer or ethylene butylene-propylene terpolymer is suitably coextruded with the core layer on the side thereof opposite from the copolyester layer. EP copolymers generally contain from 1 to 7 weight percent ethylene, the balance being propylene. This copolymer preferably comprises from 5.5 to 6.5% by weight ethylene. The copolymers have lower and broader melting points than polypropylene homopolymers. The crystalline melting point is usually from 125 to 130°C. The melt index at 230°C is generaly from 2 to 15, preferably from 3 to 8. The molecular weight is from 25,000 to 100,000 and the density from 0.89 to 0.92. Random copolymers provide improved clarity and toughness as compared with homopolymers, and the lower melting point allows them to be used as heat seal layers.

Prior to extrusion, the EP random copolymer layer is preferably compounded with an anti-blocking agent. Materials such as silica, clays, talc and glass may be employed for this purpose. Spheroidal or low aspect ratio particles are often preferred. The preferred anti-blocking agent is a clay (KAOPOLITE SF-O) loaded from 3400 to 4600 ppm. A significant number of the particles will have portions extended beyond the exposed surface of the EP random copolymer layer.

The following Example illustrates the invention.

## EXAMPLE

A multi-layer film including the above-described core, copolyester, and EP random copolymer layers is coextruded, quenched at 110 to 135°F on a casting drum, and then reheated for orientation. The copolyester layer is reheated to about 170°F while the EP random copolymer layer is reheated to about 230°F. The film is stretched in the machine direction by means of transport rolls which rotate at different speeds. The longitudinal stretching is conducted at a draw ratio of about four to eight. After machine direction orientation, the film is stretched in the transverse direction in an appropriately heated oven and tenter frame. The draw ratio is from 7:1 to 9:1. (The acceptable range is from 5:1 to 10:1).

The resulting film structure has an overall thickness of about 0.80 mil. The core layer is about 0.66 mil, the copolyester layer is about 0.10 mil, and the EP copolymer sealant layer is about 0.04 mil. The copolyester layer is corona discharge treated in a known manner, and a metallized coating is thereafter applied. (Techniques such as electroplating, sputtering and vacuum metallizing may be employed. Vacuum deposition is preferred). Corona discharge treatment provides a wetting tension of greater than about 56 dynes/cm as compared to 35-36 dynes/cm without such treatment. Treatment is applied after biaxial stretching to only the copolyester surface.

Samples prepared in the above-described manner have been found to have a seal strength of about 300 grams/inch at 230°F for both skin layers. Metal uniformity varies less than 0.20 units of optical density across a fifteen inch piece of film. Good metal adherence to the corona treated surface is also obtained.

Prior to metallization, the water vapor transmission rate (WVTR) is about $0.51g/100in.^2/day$ at 100°F and 90% relative humidity. This rate is reduced to about 0.05 after metallizing. A similar reduction of the oxygen transmission rate is obtained, the metallized substrate having a rate of $0.39$ $cc/100in.^2/day$ as compared with 71 $cc/100in.^2/day$ for the untreated film.

## Claims

1. A metallizable, oriented plastics film which comprises:

(i) a core layer comprising an isotactic polypropylene;

(ii) a coextruded copolyester layer bonded to one side of the core layer; and

(iii) a coextruded heat sealable layer bonded to the opposite side of the core layer.

2. A film according to claim 1 wherein the core layer (i) comprises an adhesion promoting agent.

3. A film acording to claim 1 or 2 wherein the copolyester comprising layer (ii) is amorphous.

4. A film according to any preceding claim wherein the copolyester layer (ii) comprises ethylene-1, 4-cyclohexylene-dimethylene terephthalate.

5. A film according to any preceding claim wherein the copolyester layer (ii) is subjected to corona discharge treatment.

6. A film according to any preceding claim which comprises a vinylidene chloride copolymer coating upon the copolyester layer (ii).

7. A film according to claim 1 wherein the coextruded sealable layer (iii) comprises an ethylene-propylene random copolymer.

8. A film according to claim 1 or 7 wherein the coextruded heat sealable layer (iii) comprises an anti-blocking agent.

9. A film according to claim 1 which is biaxially oriented.

10. A film according to claim 1 which is stretched from four to eight times in the longitudinal direction.

11. A film according to any preceding claim which is stretched from seven to nine times in the transverse direction.

12. A metal coated, oriented plastics film which comprises a film according to any preceding claim having (iv) a metal coating upon the coextruded copolyester layer (ii)

13. Use of a copolyester layer (ii) in bonding a metal coating (iv) to a polypropylene core layer (i).

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| Y | EP-A-153081 (TORAY INDUSTRIES, INC.)<br>* page 2, lines 25 - 33 *<br>* page 3, lines 8 - 20 *<br>* page 4, line 29 - page 5, line 20 * | 1-4,<br>7-9, 12 | B32B27/32<br>B32B27/36 |
| X | | 13 | |
| Y | EP-A-282917 (HOECHST AKT.)<br>* claims 1-5, 12 * | 1-4,<br>7-9, 12 | |
| A | FR-A-2618726 (RAYMOND MORIN, S.A.)<br>* page 3, line 37 - page 4, line 16 *<br>* page 5, lines 14 - 20 *<br>* page 5, lines 32 - 37 *<br>* claims 1, 7 * | 1, 6, 12 | |
| X | | 13 | |
| A | EP-A-220620 (HOECHST AKT.)<br>* claims 1, 2, 4 * | 1, 7, 9 | |
| A | US-A-4493872 (FUNDERBURK ET AL.)<br>* column 8, line 50 - column 9, line 6; claims 1, 3, 4 * | 1, 12,<br>13 | TECHNICAL FIELDS SEARCHED (Int. Cl.5) |
| A | EP-A-96581 (IDEMITSU PETROCHEMICAL COMP. LTED.)<br>* page 2, line 23 - page 3, line 15 *<br>* page 4, line 22 - page 7, line 7 *<br>* page 7, lines 14 - 16 * | 1, 13 | B32B |

The present search report has been drawn up for all claims

| Place of search | Date of completion of the search | Examiner |
|---|---|---|
| THE HAGUE | 26 OCTOBER 1990 | IBARROLA TORRES O. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

 

& : member of the same patent family, corresponding document

EPO FORM 1503 03.82 (P0401)